(19) Europäisches Patentamt

European Patent Office

Office européen des brevets

(11) **EP 1 142 420 B1**

(12) **EUROPEAN PATENT SPECIFICATION**

(45) Date of publication and mention
of the grant of the patent:
**19.07.2006 Bulletin 2006/29**

(51) Int Cl.:
***H04Q 7/38*** (2006.01)

(21) Application number: **99965705.9**

(22) Date of filing: **30.12.1999**

(86) International application number:
**PCT/SE1999/002500**

(87) International publication number:
**WO 2000/041426 (13.07.2000 Gazette 2000/28)**

(54) **BEARER SERVICE NEGOTIATION**

VERHANDLUNG VON TRÄGERDIENSTEN

NEGOTIATION DE SERVICES AVEC UN FOURNISSEUR

(84) Designated Contracting States:
**DE GB**

(30) Priority: **04.01.1999 US 225223**

(43) Date of publication of application:
**10.10.2001 Bulletin 2001/41**

(73) Proprietor: **TELEFONAKTIEBOLAGET LM
ERICSSON (publ)
164 83 Stockholm (SE)**

(72) Inventors:
• **ALMGREN, Magnus
S-191 43 Sollentuna (SE)**
• **OLOFSSON, Hakan
S-118 67 Stockholm (SE)**
• **DE VERDIER, Lisa
S-161 33 Bromma (SE)**

(74) Representative: **HOFFMANN EITLE
Patent- und Rechtsanwälte
Arabellastrasse 4
81925 München (DE)**

(56) References cited:
**EP-A- 0 848 560      WO-A-95/35002
WO-A-97/37457      WO-A-97/50263
US-A- 5 777 986**

**Description**

This invention relates to cellular telecommunications networks and more particularly to a quality-of-service (QoS) negotiation between a communication unit and a service provider (i.e.. a bearer such as a radio network) at call set-up or at handoff.

In a typical cellular communication network, a user defines his or her service requirements to a bearer (i.e., a service provider) in terms of one or more requested quality-of-service (QoS) vectors or requested service vector, RSV. Each vector consists of a number of QoS parameters which relate to the required service. Alternatively, a user's requirements may be input into a computer or a computer application which performs the negotiation with the bearer. The QoS parameters may include, but are not limited to, required bit rate (peak, mean and/or some other rate), required bit error rate (BER) and required transmission delay. In addition, the user may also specify a price parameter for a desired service. For a given application, a range of values for each of these QoS parameters may be acceptable to the user. For example, in a web browsing application, a user normally desires a high bit rate for which the user is willing to pay a higher price. However, a user may tolerate a lower bit rate if the user is interested in minimizing the price. For some applications, the range of values for certain QoS parameters that the user is willing to accept may be relatively small. For example, in a voice application, the user may not be willing to tolerate a lower bit rate or a longer transmission delay because of the susceptibility of speech data to low bit rates and/or long delays. Under less than acceptable conditions, e.g., low bit rate and long delay, it may be preferable that the call be blocked.

One way the user can express its service requirements to the service provider is to define two QoS vectors, wherein the QoS parameter values in the first QoS vector represent a desired service, and wherein the QoS parameter values in the second QoS vector represent an acceptable (or minium level of) service. Typically, the desired QoS parameter values indicate a lower price level sensitivity on behalf of the user, as suggested above. In contrast, the acceptable QoS parameter values are associated with a higher price level sensitivity. In the case of speech, the desired value and the acceptable value for certain QoS parameters (e.g., maximum transmission delay) may be the same, thus indicating a user's unwillingness to accept less than desired values for those QoS parameters. The at least two QoS vectors containing the desired and acceptable QoS parameter values may be expressed as:

$$QoS_{desired} = (bit\ rate_{maximum},\ delay_{minimum},\ ...,\ price_{desired})$$

$$QoS_{minimum} = (bit\ rate_{minimum},\ delay_{maximum},\ ...,\ price_{acceptable})$$

Alternatively, a user may define for the service provider a set of QoS vectors, $QoS_1... QoS_n$, wherein the combination of QoS parameter values in vector $QoS_1$ represent a desired service, wherein the combination of QoS parameter values in vector $QoS_n$ represent a minimum, but acceptable service, and wherein the combination of QoS parameter values in vectors $QoS_2$ to $QoS_{n-1}$ represent acceptable service that is less than the desired service but better than the minimum acceptable service. In the web browsing application, for example, each of the vectors $QoS_1$ to $QoS_n$ might contain a different bit rate value. For the speech application, however, each of $QoS$ vectors $QoS_1$ to $QoS_n$ may contain the same bit rate value, once again, exemplifying that with speech data, a user is generally less likely to accept a QoS that is less than the desired QoS. The set of QoS vectors $QoS_1$ to $QoS_n$ may be expressed as:

$$QoS_1 = (bit\ rate_1,\ delay_1,\ ...,\ price_1)$$
$$QoS_2 = (bit\ rate_2,\ delay_2,\ ...,\ price_2)$$
$$QoS_3 = (bit\ rate_3,\ delay_3,\ ...,\ price_3)$$
$$QoS_4 = (bit\ rate_4,\ delay_4,\ ...,\ price_4)$$
$$\vdots$$
$$QoS_n = (bit\ rate_n,\ delay_n,\ ...,\ price_n)$$

At call set-up, handover and call re-negotiation, a determination has to be made as to which service will be used to establish a connection. The requirements of the user and the capability of the bearer have to be taken into account. The capability of the bearer is also expressed in the form of a QoS vector and may be referred to as an offered service vector, OSV. The procedure that attempts to match user requirements with bearer capabilities is known as a bearer service negotiation. The bearer service negotiation process results in the generation of a negotiated QoS vector or NSV. In general, a NSV contains QoS parameter values that reflect the service which the service provider is capable of providing and which satisfy requirements of the user specified values in a RSV. In the event that no match between the requirements of the user and the capability of the bearer is established, the NSV is said to be empty.

It should be noted that a service provider cannot always guarantee the quality of service defined by the NSV. In actuality, the QoS parameter values in the NSV merely represent the service which the service provider will attempt to achieve for the user at call set-up, handover or call re-negotiation. However, during the time period between the bearer service negotiation and, for example, call set-up, conditions may change due to such phenomena as data traffic fluctuation and fading, thereby making it impossible for the service provider to achieve the level of service defined by the NSV. If the service provider cannot, in fact, achieve at least the user's minimum acceptable service requirements, the bearer service has to be renegotiated, or in the case of an on-going call, handed-over (i.e., to a different service provider) or dropped.

European Patent EP 0848560 relates to a method and system for managing the routing of communications data. Each mode may have variable or pre-established quality of service parameter values and a pre-established session tariff. Variable modes are monitored continuously to determine the present-time quality of service parameter values. When a request to establish a communication session is received, an acceptable session tariff is calculated based upon the match of the specified requirements and the parameter values of the modes, and the mode that has the highest quality of service at or below the acceptable session tariff is selected.

What is needed is an efficient and effective bearer service negotiation technique for determining whether a service provider can fulfill a user's service requirements. A method is, therefore, disclosed for enabling the system to choose a resulting or negotiated QoS vector based on user requested QoS vector and knowledge about the networks.

Accordingly, the present invention provides an efficient method for matching the service requirements of a user with one or more levels of service provided by a bearer. More specifically, the present invention generates a negotiated QoS vector, NSV, which contains QoS parameter values and is one of the offered service vectors (OSVs) provided by the service provider that satisfy the user specified values of a RSV. In generating the NSV, the present invention determines the differences between the QoS parameter values contained in the one or more RSVs and the QoS parameter values contained in the one or more OSVs. In addition, each of the QoS parameter values are mapped on a comparable scale so as to assign a meaningful weight to each parameter.

According to a first aspect of the present invention, there is provided a method of negotiating a telecommunications connection comprising the steps of:

> introducing a first set of values of quality-of-service (QoS) parameter types representing a user's desired level of service;
>
> introducing a second set of QoS parameter values representing at least one offered level of service from a service provider and containing for the or each offered level of service a value for each of the parameter types represented in the first set;
>
> comparing each value associated with the first set of QoS parameter values to the or each corresponding value associated with the second set of QoS parameter values to determine for the or each offered level of service excess values representing differences between the values of the first set and the corresponding values of the second set associated with the respective offered level of service;
>
> forming an evaluation quantity for the or each offered level of service based on the excess values associated with the respective offered level of service;
>
> selecting a level of service offered by the service provider that best satisfies the user's desired level of service, or no service, based on the or each evaluation quantity; and
>
> if a level of service that best satisfies the user's desired level of service is selected, establishing the telecommunications connection for the user as a function of the selected level of service offered by the service provider.

According to a second aspect of the present invention, there is provided a method, in negotiating a telecommunication connection between a user and a bearer
wherein the user specifies a first set of parameter values for at least one of a plurality of parameter types for a type of connection desired, said parameter values forming a user specified quality of service (QoS) vector, and the bearer makes available a second set comprising at least one subset containing corresponding parameter values for the or each parameter type represented in the first set, the method being for matching the user specified values with an ability of the bearer for satisfying the user specified values and comprising the steps of:

accepting a value or values for at least one of a plurality of Quality-of-Service (QoS) parameter types specified by a user;

comparing the or each user-specified QoS parameter value with values of corresponding parameters available on said bearer to determine for the or each subset an excess value or values representing differences between the values of the first set and corresponding values of the respective subset;

evaluating at least one evaluation quantity, wherein the or each evaluation quantity is determined by the excess value or values associated with the first set of QoS parameter values and a respective subset of the second set of QoS parameter values; and

establishing a connection between the user and the bearer as a function of the or each evaluated evaluation quantity.

For a better understanding of the invention and to show how the same may be carried into effect, reference will now be made, by way of example, to the accompanying drawings, in which:

Figure 1 illustrates a framework for bearer service negotiation according to an exemplary embodiment of the present invention;

Figure 2 illustrates a first exemplary technique for generating a negotiated QoS vector, NSV, from a plurality of offered QoS vectors, OSVs;

Figure 3 illustrates another exemplary technique for generating a NSV from a plurality of OSVs;

Figure 4 illustrates yet another exemplary techniques for generating a NSV from a plurality of requested QoS vectors, RSVs, and a plurality of OSVs; and

Figure 5 illustrates the values of an OSV failing to fulfill the RSV parameters.

The present invention involves an effective and efficient technique for accomplishing a service bearer negotiation between a user and a service provider (i.e., a bearer service). In general, the technique involves comparing one or more user-defined service requirements with one or more levels of service offered by a service provider and, if possible, selecting the level of service that best satisfies the user's service requirements. This may be accomplished by a three step process in which: (i) one or more requested QoS vectors, $RSV_s$, are introduced by the user and one or more offered QoS vectors, OSVs, are introduced by the service provider respectively; (ii) the QoS parameters contained in the various QoS vectors are normalized by applying an appropriate scaling factor; and (iii) a negotiated QoS vector, NSV, is chosen from amongst the one or more OSVs, where the NSV represents the OSV that best satisfies the user's service requirements.

As an alternate way of specifying the price parameter as part of the RSV, the user may also specify a price sensitivity level parameter for a desired service. This parameter may generically be specified as high or low. For a given application, a range of values for each of these QoS parameters may be acceptable to the user. For example, in a web browsing application, a user normally desires a high bit rate for which the user's sensitivity level to price is low. However, the user may tolerate a lower bit rate if the user's sensitivity level to price is high. With this approach to price, the QoS will contain a price sensitivity level parameter. Referring to the above described instance of desired and minimum or acceptable level of service, the sensitivity level may be low for desired service and high for minimum or acceptable level of service.

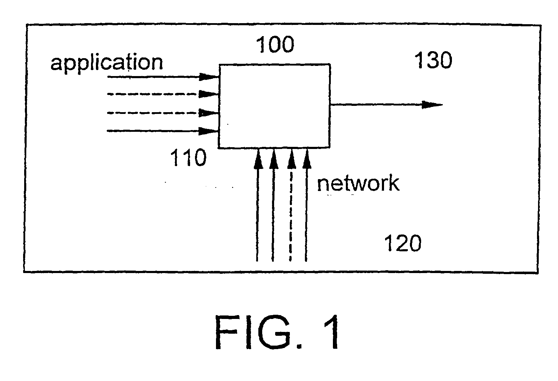

A general framework for matching a user's service requirements with a service provider's capabilities, according to exemplary embodiments of the present invention, is illustrated in Figure 1. In accordance with Figure 1, and in accordance with the first step in the described three-step process, one or more RSVs 110 are introduced to the bearer service negotiation framework 100. The bearer service negotiation framework 100 then accesses one or more OSVs 120. Within the bearer service negotiation framework 100, the one or more RSVs 110 and the one or more OSVs 120 are compared, as explained in greater detail below. The bearer service negotiation framework 100 then generates a NSV 130 if, in comparing the requirements of the user (i.e., the QoS parameter values in the RSVs 110) and the capabilities of the service provider (i.e., the QoS parameter values in the one or more OSVs 120), it is determined that the quality of service defined by the QoS parameter values in the one or more RSVs can be provided by the service provider.

In a preferred embodiment, the QoS parameters contained in each of the RSVs 110, the OSVs 120, and the NSV 130 will be the same. For example, if the RSVs 110 contain QoS parameters for bit rate and quality, then the OSVs 120 and the NSV 130 will also contain QoS parameters for bit rate and quality. Another QoS parameter that might be contained in each of the QoS vectors is a parameter representing a user's price sensitivity level. The value of this level may either be low or high. The use of this parameter within a RSV is explained above. With respect to the OSV, the significance of the price sensitivity level parameter is as follows: If the network traffic is low or if the network is idle, the price sensitivity level within the OSV would be low. This means that the network is willing to provide a service or connection at little or no cost. Therefore, if the user's price sensitivity level is high, then a OSV with a low price sensitivity level would match this user requirement. On the other hand, the price sensitivity level within an OSV may be high. This may result from the network being busy with a high volume of traffic. In this case, a RSV with a low price sensitivity level would best match the OSV as the user does not mind paying more for the service. It should be noted, however, that if the price sensitivity level is low within an OSV, then the sensitivity level within a RSV is irrelevant. That is, if the network is willing to provide a connection at little or no cost, then it does not matter whether the user sensitivity level to price is high or low. If the level is high within an OSV on the other hand, then the user specified level has to be low to enable connection.

The OSVs 120 may be generated by a bearer service, preferably based on measurements of interference, load and gain. According to an exemplary embodiment, the OSVs 120 are generated based on long-term measurements of interference, load and gain, and in accordance with techniques that are well-known in the art. If necessary, short-term measurements may also be considered in generating OSVs 120.

In accordance with the second step in the described three-step process , the QoS parameter values contained in each of the RSVs and in each of the OSVs are scaled. This scaling may be performed on each parameter to convert the parameter to a norm such as, for example, a unitary norm. The reason for scaling is to evaluate each of the parameter values in a proper context as the parameters may not always be represented on a linear scale. One of the parameters, bit rate for example, may only be represented on a logarithmic scale. Delay, on the other hand, may be represented only on a negative scale. By normalizing the various parameters, a weight function may be assigned to one of the parameters and another weight function may be assigned to another of the parameters.

Another reason for scaling the various QoS parameter values is that in deciding which OSV best matches the user's requirements, the appropriate amount of deference should be given to each QoS parameter. For example, if bit rate is of utmost importance to the user, as compared to the other QoS parameters, such as delay and/or signal quality, then the bit rate parameter values will be scaled, relative to the other parameter values, to reflect that importance. Thus, in comparing the desirability between two different OSVs, wherein the first OSV contains a bit rate parameter value that is just marginally better than the bit rate parameter value in the second OSV, the first OSV might be selected as being more desirable over the second OSV, during the third step of the described three-step process, despite the fact that the signal quality value reflected in the second QoS vector is far superior to the signal quality value reflected in the first QoS vector.

As one skilled in the art will readily appreciate, scaling may be achieved in accordance with any number of well-known techniques. For example, a comparable scale might be maintained for each QoS parameter type (e.g., bit rate, signal quality). Then, during the second step of the described three-step process, each of the various QoS parameter values contained in the RSVs and the OSVs would be mapped to the corresponding scale. By doing so, each QoS parameter value is adjusted to reflect the relative importance of the corresponding QoS parameter type. Alternatively, each QoS parameter type might be assigned a particular weighting factor. Then, during this second step, the appropriate weighting factor is applied to each QoS parameter value. However, regardless whether the former, the latter or some other alternative scaling technique is utilized, it will be understood that by scaling the various QoS parameter values, the appropriate amount of deference is given to each QoS parameter type.

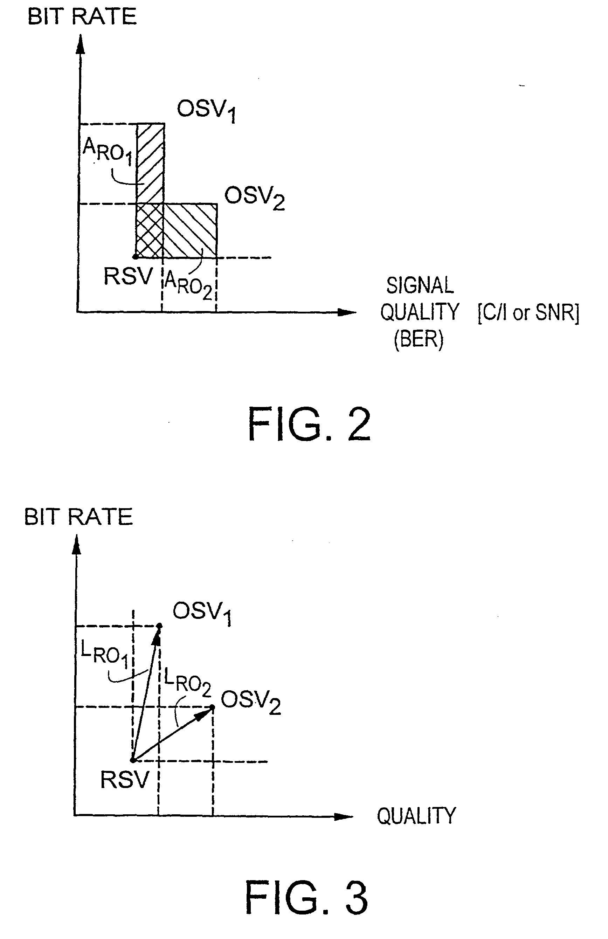

In accordance with the third step in the described three-step process, the one or more RSVs 110 are compared with the one or more OSVs 120, and if, as stated above, a match is achieved between the one or more RSVs 110 and with the one or more OSVs 120, a negotiated QoS vector, NSV, 130 is generated. Of course, there are a number of different techniques that can be employed to accomplish this third step. Figures 2-4 illustrate a number of exemplary techniques for accomplishing the third step of the described three-step process.

Before describing each of the exemplary techniques depicted in Figures 2-4, it should be noted that if the RSVs 110, the OSVs 120 and the NSV 130 contained N number of QoS parameters, then the graphs depicted in Figures 2-4 would have N number of dimensions. However, in order to simplify the discussion of the various techniques that can be employed to accomplish the third step in the described process, the various QoS vectors depicted in Figures 2-4 contain only two QoS parameters, for example, bit rate and signal quality. Hence, the graphs depicted in Figures 2-4 are all two-dimensional graphs.

In Figure 2, a first exemplary technique for accomplishing the third step in the described three-step process is illustrated. In the illustrated example, one RSV and two OSVs are present. The overlap area $A_{RO1}$ between the regions defined by $OSV_1$ and RSV, and the overlap area $A_{RO2}$ between the regions defined by $OSV_2$ and RSV are used for determining a NSV. As one skilled in the art will readily appreciate after reviewing Figure 2, the area below and to the left of $OSV_1$ represents a particular level of service as defined by the two QoS parameter values in $OSV_1$, bit rate and signal quality. Similarly, the area below and to the left of $OSV_2$ represents a particular level of service as defined by the two QoS parameter values in $OSV_2$, again, bit rate and signal quality. In contrast, the area above and to the right of RSV represents the level of service being requested by the user. Accordingly, the overlap areas $A_{RO1}$ and $A_{RO2}$ represent the difference between the level of service being requested by the user and the level of service being offered by the bearer as defined by $OSV_1$ and $OSV_2$ respectively.

One of skill in the art will also understand that both the level of service Associated with $OSV_1$ and the level of service associated with $OSV_2$ satisfy the user's service requirements as defined by RSV. However, the level of service associated with $OSV_1$ is capable of providing a better bit rate than the level of service associated with $OSV_2$. In contrast,

the level of service associated with $OSV_2$ is capable of providing a better signal quality than the level of service associated with $OSV_1$. Therefore, a determination has to be made as to whether to choose the level of service associated with $OSV_1$ or the level of service associated with $OSV_2$. In accordance with this first exemplary technique, the largest overlap area is used to determine which level of service best satisfies the user's service requirements. The overlap areas are computed by computing the product of the difference between the parameters of the RSV and each of $OSV_1$ and $OSV_2$. In this case, both OSVs satisfy the RSV, but the overlap area $A_{RO2}$ is greater than the overlap area $A_{RO1}$ as the difference between each of the parameters of RSV and the corresponding parameters of $OSV_2$ is greater than the corresponding differences between $OSV_1$ and RSV. The greater overlap area indicates the OSV parameters satisfying the RSV parameters by a greater margin than with the smaller overlap area. Therefore, the level of service associated with $OSV_2$ is determined to best satisfy the user's service requirements, and $OSV_2$ is, therefore, selected as the negotiated QoS vector, NSV. It should be pointed out that if an area results that is zero, no NSV is determined and the user may be blocked from establishing a connection or dropped in the case of a handoff.

Figure 3 illustrates a second exemplary technique for accomplishing the third step in the described process. In accordance with this second exemplary technique, a determination is first made as to whether the level of service associated with each of $OSV_1$ and $OSV_2$ meet the user's service requirements, that is, whether all of the QoS parameter values in each of $OSV_1$ and $OSV_2$ satisfy the QoS parameter values in the RSV. Then, considering only those OSVs that satisfy the user's requirements, the one OSV that has the longest length is selected as the RSV, wherein the level of service associated with that one OSV is established as the level of service that best satisfies the user's service requirements.

In this case, the longest length vector represents a preference for choosing the OSV which not only satisfies the RSV but also contains one parameter which satisfies the corresponding parameter in the RSV by the greatest margin. As illustrated in Fig. 3, both $OSV_1$ and $OSV_2$ satisfy the RSV. $OSV_1$ satisfies the bit rate parameter of RSV by a greater margin than does $OSV_2$ and $OSV_2$ satisfies the quality parameter of RSV by a greater margin that $OSV_1$ does. However, $OSV_1$ satisfies the bit rate parameter of RSV by a greater margin than $OSV_2$ satisfies the quality parameter of RSV. Therefore, $OSV_1$ is chosen as the NSV.

It should be noted that Fig. 3 only illustrates the presence of one RSV and two OSVs. The technique described with respect to Fig. 3 may easily extend to a situation where multiple. RSVs introduced and multiple OSVs are available. In this instance, each OSV is compared to one RSV and those OSVs that do not satisfy a first RSV will not be considered as candidates for being a NSV. This process may be repeated for all RSVs presented by the user.

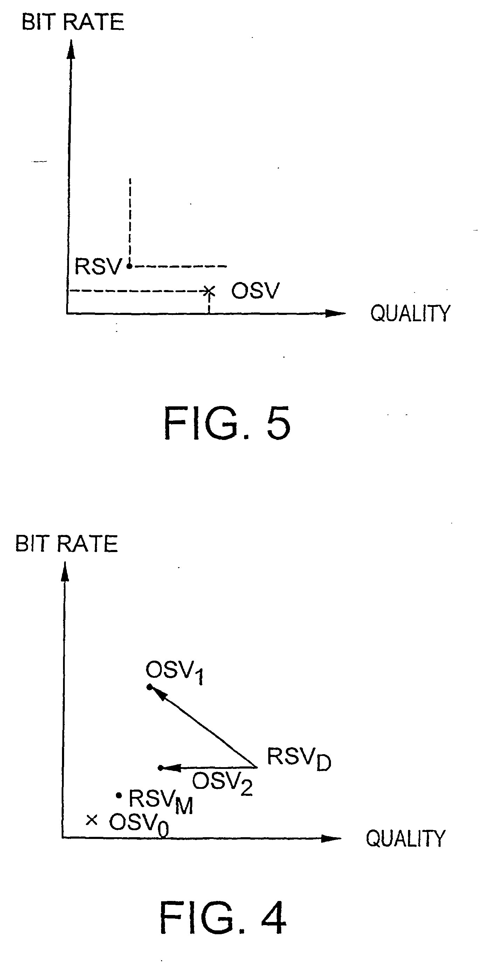

A third exemplary technique for accomplishing the third step in the described process is illustrated in Figure 4. In accordance with this technique, the user generates two requested QoS vectors $RSV_D$ and $RSV_M$, as illustrated in Figure 4. wherein the QoS parameter values contained in $RSV_D$ represents the user's desired level of service, and wherein the QoS parameter values contained in $RSV_M$ represent the user's minimum acceptable level of service. The bearer, for example, then generates three OSVs. $OSV_0$, $OSV_1$ and $OSV_2$. In determining which of $OSV_1$, $OSV_2$ or $OSV_3$ defines the level of service that best satisfies the user's requirements, the third exemplary technique first establishes whether any of $OSV_1$, $OSV_2$ or $OSV_3$ define a level of service that fails to satisfy the user's minimum acceptable requirements, as defined by $RSV_M$. In the example illustrated in Figure 4, it will be understood that only the level of service defined by $OSV_0$ fails to satisfy the user's minimum requirements. Accordingly, $OSV_0$ is no longer considered. Next, a determination is made as to which of $OSV_1$ or $OSV_2$ defines the level of service that best satisfies the user's desired service, as defined by $RSV_D$. This is accomplished by comparing the magnitude of $OSV_1$ with the magnitude of $OSV_2$, and selecting the OSV having the smallest magnitude. In the present example, the magnitude of $OSV_2$ (i.e., $L_{RDO2}$) is less than the magnitude of $OSV_1$ (i.e., $L_{RDO1}$). Accordingly, the level of service defined by $OSV_2$ is established as being the one that most closely matches the user's desired service requirements, as defined by $RSV_D$, and $OSV_2$ is chosen as the NSV.

Figure 5 illustrates a situation where the bearer is unable to generate any offered vectors that define a level of service which satisfy the user's requirements, as defined by RSV. As illustrated in the example of Figure 5, the bearer is only capable of providing a level of service as defined by OSV, wherein the signal quality associated with the level of service offered by the bearer satisfies the user's signal quality requirements but wherein the bit rate associated with the level of service offered by the bearer fails to satisfy the user's bit rate requirements. As the bearer is unable to offer a level of service that meets the user's service requirements, an empty NSV is generated (e.g., a QoS vector with each QoS parameter value set equal to zero, thereby indicating that the bearer was unable to offer a level of service acceptable to the user), in accordance with a preferred embodiment of the present invention. Accordingly, the user may have to submit a different RSV, i.e., one that defines a level of service that the bearer is capable of satisfying, or the user may have to negotiate with another service provider (i.e., bearer). In the event that the user is unable to negotiate an acceptable level of service with any service provider, the user may be blocked from establishing a connection or dropped in the case of a handoff.

In addition to the exemplary QoS parameters discussed above, such as bit rate and signal quality, a generic price sensitivity level may also be included as one of the QoS parameters considered in the decision as to which level of service best satisfies the user's service requirements. The value of this parameter would indicate the user's sensitivity level for the level of service defined by the other QoS parameter values in the RSV.

The price sensitivity level may be utilized, for example, to alter the selection of the offered QoS vector, particularly when there are several offered QoS vectors which define a level of service that satisfy the user's requirements, and where the user has indicated a high sensitivity level. For instance, in the example described above with respect to Figure 2, $OSV_2$ was selected over $OSV_1$ because the level of service defined by $OSV_2$ exceeded the user's requirements by a greater amount than the level of service defined by the $OSV_1$. However, had the user indicated a high sensitivity level, $OSV_1$ may have been chosen as the NSV over the $OSV_2$.

The present invention has been described in terms of specific embodiments to facilitate understanding. The above embodiments, however, are illustrative rather than restrictive. It will be readily apparent to one skilled in the art that departures may be made from the specific embodiments shown above without departing from the invention. Therefore, the invention should not be regarded as being limited to the above examples, but should be regarded instead as being fully commensurate in scope with the following claims.

**Claims**

1. A method of negotiating a telecommunications connection comprising the steps of: Qos

    introducing a first set of values of QoS (quality-of-service) parameter types representing a user's desired level of service;

    introducing a second set of QoS parameter values representing at least one offered level of service from a service provider and containing for the or each offered level of service a value for each of the parameter types represented in the first set;

    comparing each value associated with the first set of QoS parameter values to the or each corresponding value associated with the second set of QoS parameter values to determine for the or each offered level of service excess values representing differences between the values of the first set and the corresponding values of the second set associated with the respective offered level of service;

    forming an evaluation quantity for the or each offered level of service based on the excess values associated with the respective offered level of service;

    selecting a level of service offered by the service provider that best satisfies the user's desired level of service, or no service, based on the or each evaluation quantity; and

    if a level of service that best satisfies the user's desired level of service is selected, establishing the telecommunications connection for the user as a function of the selected level of service offered by the service provider.

2. The method of Claim 1, wherein each QoS parameter value of the first set of values is associated with a different QoS parameter type.

3. The method of Claim 2, wherein said second set of QoS parameter values comprises a plurality of subsets of QoS parameter values, and wherein each of the plurality of subsets contains a QoS parameter value for each of the QoS parameter types represented in the first set of QoS parameter values.

4. The method of Claim 3, wherein said step of comparing each value associated with the first set of QoS parameter values to the or each corresponding value associated with the second set of QoS parameter values comprises the steps of:

    establishing a first graphical space as a function of the first set of QoS parameter values;

    establishing a plurality of graphical spaces, wherein each of the plurality of graphical spaces is a function of the QoS parameter values in a corresponding one of the plurality of subsets of QoS parameter values; and

    determining a plurality of overlapping regions, wherein each of the plurality of overlapping regions represents an overlapping space between the first graphical space and a different one of the plurality of graphical spaces; and wherein

    the step of forming an evaluation quantity for the or each offered level of service comprises the steps of:

        evaluating the size associated with each overlapping region; and

        comparing the evaluated sizes.

5. The method of Claim 4, wherein said step of selecting a level of service offered by the service provider that best satisfies the user's desired level of service, or no service, comprises the step of:

selecting a level of service offered by the service provider as a function of the size associated with each overlapping region, or no service.

**6.** The method of Claim 5, wherein said step of selecting a level of service as a function of the size associated with each overlapping region, or no service, comprises the step of:

selecting a level of service offered by the service provider based on the one subset of QoS parameter values which is associated with the largest of the plurality of evaluated sizes.

**7.** The method of Claim 3, wherein said step of comparing each value associated with the first set of QoS parameter values to the or each corresponding value associated with the second set of QoS parameter values comprises the step of:

establishing a plurality of magnitudes, wherein each of the plurality of magnitudes is a function of a vector defined by the first set of QoS parameter values and the QoS parameter values in a corresponding one of the plurality of subsets of QoS parameter values; and wherein
the step of forming an evaluation quantity for the or each offered level of service comprises the steps of:

evaluating each of the plurality of magnitudes; and
comparing the evaluated magnitudes.

**8.** The method of Claim 7, wherein said step of selecting a level of service offered by the service provider that best satisfies the user's desired level of service, or no service, comprises the step of:

selecting no service, or a level of service offered by the service provider as a function of the compared evaluated magnitudes.

**9.** The method of Claim 8, wherein said step of selecting no service, or a level of service as a function of the compared evaluated magnitudes comprises the step of:

selecting no service, or a level of service offered by the service provider based on the one subset of QoS parameter values which is associated with the largest of the plurality of compared evaluated magnitudes.

**10.** The method of Claim 3 further comprising the steps of:

determining whether the level of service associated with each of the plurality of subsets of QoS parameter values satisfies a minimum level of service desired by the user; and
identifying only those subsets of QoS parameter values that satisfy the minimum level of service desired by the user;
establishing a plurality of magnitudes, wherein each of the plurality of magnitudes is a function of a vector defined by the first set of QoS parameter values and the QoS parameter values in a corresponding one of the subsets of QoS parameter values that satisfy the minimum level of service desired by the user; and
comparing each of the plurality of magnitudes, wherein said step of selecting a level of service offered by the service provider, or no service, comprises the step of:

selecting no service, or a level of service based on the one subset of QoS parameter values which is associated with the smallest of the plurality of magnitudes.

**11.** A method in negotiating a telecommunication connection between a user and a bearer wherein the user specifies a first set of parameter values for at least one of a plurality of parameter types for a type of connection desired, said parameter values forming a user specified QoS (quality of service) vector, and the bearer makes available a second set comprising at least one subset containing corresgonding parameter values for the or each parameter type represented in the first set, the method being for matching the user specified values with an ability of the bearer for satisfying the user specified values and comprising the steps of:

accepting a value or values for at least one of a plurality of QoS parameter types specified by a user;

comparing the or each user-specified QoS parameter value with values of corresponding parameters available on said bearer to determine for the or each subset an excess value or values representing differences between the values of the first set and corresponding values of the respective subset;

evaluating at least one evaluation quantity, wherein the or each evaluation quantity is determined by the excess value or values associated with the first set of QoS parameter values and a respective subset of the second set of QoS parameter values; and

establishing a connection between the user and the bearer as a function of the or each evaluated evaluation quantity.

12. The method of Claim 11, wherein a connection to the bearer is blocked if the user-specified values for each of said parameter types is not satisfied by the bearer.

13. The method of Claim 11, wherein the parameter values comprise at least one of a bit rate, a bit error rate and a delay.

14. The method of Claim 11, wherein the user-specified values for said parameter types form a requested QoS vector (RSV).

15. The method of Claim 14, wherein the corresponding values of parameter types available on a service provider form an offered QoS vector (OSV).

16. The method of Claim 15, wherein the values of parameter types representing the established connection form a negotiated QoS vector (NSV).

17. The method of Claim 15, wherein values for each parameter type of an OSV are derived from long term measurements.

18. The method of Claim 15, wherein a connection is negotiated if the bit rate of an OSV is at least equal to the bit rate of the RSV and each of bit error rate and delay of the OSV are at most equal to the bit error rate and delay of the RSV.

19. The method of Claim 15, wherein a plurality of offered QoS vectors (OSVs) satisfy the requested QoS vector (RSV).

20. The method of Claim 14, wherein the user specifies a plurality of values for each of a plurality of parameter types that form a plurality of RSVs.

21. The method of Claim 20, wherein the user-specified values form two RSVs.

22. The method of Claim 21, wherein the specified values for the two RSVs are desired values and acceptable values.

23. The method of Claim 16, wherein an NSV is a zero vector if each of the parameters of at least one OSV does not satisfy a corresponding parameter of a RSV.

24. The method of Claim 13, wherein the user-specified values of parameter types further include a price sensitivity level that is tolerated by the user.

**Patentansprüche**

1. Verfahren zum Abschließen einer Telekommunikationsverbindung umfassend folgende Schritte:

Einführen eines ersten Satzes von Werten von QoS (Servicequalität)-Parametertypen, welche die gewünschte Servicegröße eines Nutzers repräsentieren;

Einführen eines zweiten Satzes von QoS-Parameterwerten, welche wenigstens eine angebotene Servicegröße von einem Serviceanbieter repräsentieren und für jede der angebotenen Servicegrößen einen Wert für jeden im ersten Satz repräsentierten Parametertyp enthalten;

Vergleichen jedes dem ersten Satz von QoS-Parameterwerten zugeordneten Wertes mit dem oder jedem dem zweiten Satz von QoS-Parameterwerten zugeordneten entsprechenden Wert, um für die oder jede angebotene Servicegröße Überschusswerte zu bestimmen, welche Differenzen zwischen den Werten des ersten Satzes und den zugehörigen Werten des der jeweiligen angebotenen Servicegröße zugeordneten zweiten Satzes repräsentieren;

Bilden einer Auswertegröße für die oder jede angebotene Servicegröße auf der Basis der der entsprechenden angebotenen Servicegröße zugeordneten Überschusswerte;

Auswählen einer durch den Serviceanbieter angebotenen Servicegröße oder keiner Servicegröße auf der Basis des oder jeder Auswertegröße; und

Herstellen der Telekommunikationsverbindung für den Nutzer als Funktion der ausgewählten durch den Serviceanbieter angebotenen Servicegröße, wenn eine die vom Nutzer gewünschte Servicegröße am besten erfüllende Servicegröße gewählt wird.

2. Verfahren nach Anspruch 1, bei dem jeder QoS-Parameterwert des ersten Wertesatzes einem anderen QoS-Parametertyp zugeordnet ist.

3. Verfahren nach Anspruch 2, bei dem der zweite Satz von QoS-Parameterwerten eine Vielzahl von Untersätzen von QoS-Parameterwerten umfasst und bei dem jeder der Vielzahl von Untersätzen einen QoS-Parameterwert für jeden im ersten Satz von QoS-Parameterwerten repräsentierten QoS-Parametertyp enthält.

4. Verfahren nach Anspruch 3, bei dem der Schritt des Vergleichens jedes dem ersten Satz von QoS-Parameterwerten zugeordneten Wertes mit dem oder jedem dem zweiten Satz von QoS-Parametern zugeordneten entsprechenden Wert folgende Schritte umfasst:

Bilden eines ersten grafischen Raums als Funktion des ersten Satzes von QoS-Parameterwerten;

Bilden einer Vielzahl von grafischen Räumen, wobei jeder der Vielzahl von grafischen Räumen eine Funktion der QoS-Parameterwerte in einem entsprechenden Untersatz der Vielzahl von Untersätzen der QoS-Parameterwerte ist; und

Bestimmen einer Vielzahl von sich überlappenden Bereichen, wobei jeder der sich überlappenden Bereiche einen überlappenden Raum zwischen dem ersten grafischen Raum und einem anderen Raum der Vielzahl von grafischen Räumen repräsentiert; und bei dem der Schritt der Bildung einer Auswertegröße für die oder jede der angebotenen Servicegröße die Schritte

des Auswertens der jedem überlappenden Bereich zugeordneten Größe; und

Vergleichen der ausgewerteten Größen umfasst.

5. Verfahren nach Anspruch 4, bei dem der Schritt der Auswahl einer durch den Serviceanbieter angebotenen Servicegröße, welche die vom Nutzer gewünschte Servicegröße am besten erfüllt, oder von keinem Service folgenden Schritt umfasst:

Auswählen einer durch den Serviceanbieter angebotenen Servicegröße als Funktion der jedem überlappenden Bereich zugeordneten Größe oder keinen Service.

6. Verfahren nach Anspruch 5, bei dem der Schritt des Auswählens einer Servicegröße als Funktion der jeden überlappenden Bereich zugeordneten Größe oder von keinem Service folgenden Schritt umfasst:

Auswählen einer durch den Serviceanbieter angebotenen Servicegröße auf der Basis des einen Untersatzes von QoS-Parameterwerten, welche der größten der Vielzahl von ausgewerteten Größen zugeordnet ist.

7. Verfahren nach Anspruch 3, bei dem der Schritt des Vergleichens jedes dem ersten Satz von QoS-Parameterwerten zugeordneten Wertes mit dem oder jedem dem zweiten Satz von QoS-Parameterwerten zugeordneten entsprechenden Wert folgenden Schritt umfasst:

Bilden einer Vielzahl von Größen, wobei jede der Vielzahl von Größen eine Funktion eines Vektors ist, der durch den ersten Satz von QoS-Parameterwerten und die QoS-Parameterwerte in einem entsprechenden Untersatz der Vielzahl von Untersätzen von QoS-Parameterwerten definiert ist; und bei dem der Schritt der Bildung einer Auswertegröße für die oder jede angebotene Servicegröße die Schritte:

Auswerten jeder der Vielzahl von Größen; und

Vergleichen der ausgewerteten Größen umfasst.

8. Verfahren nach Anspruch 7, bei dem der Schritt des Auswählens einer durch den Serviceanbieter angebotenen Servicegröße, welche die vom Nutzer gewünschte Servicegröße am besten erfüllt, oder von keinem Service folgenden Schritt umfasst:

Auswählen keiner Servicegröße oder einer durch den Serviceanbieter angebotenen Servicegröße als Funktion der verglichenen ausgewerteten Größen.

9. Verfahren nach Anspruch 8, bei dem der Schritt des Auswählens von keinem Service oder einer Servicegröße als Funktion der verglichenen ausgewerteten Größen folgenden Schritt umfasst:

Auswählen von keinem Service oder einer durch den Serviceanbieter angebotenen Servicegröße auf der Basis des einen Untersatzes von QoS-Parameterwerten, welche der größten der Vielzahl von verglichenen ausgewerteten Größen zugeordnet ist.

10. Verfahren nach Anspruch 3 weiterhin umfassend folgende Schritte:

Bestimmen, ob die jeder der Vielzahl von Untersätzen von QoS-Parameterwerten zugeordnete Servicegröße eine vom Nutzer gewünschte minimale Servicegröße erfüllt; und
Identifizieren lediglich der Untersätze von QoS-Parameterwerten, welche die vom Benutzer gewünschte minimale Servicegröße erfüllen;
Bilden einer Vielzahl von Größen, wobei jede der Vielzahl von Größen eine Funktion eines Vektors ist, der durch den ersten Satz von QoS-Parameterwerten und den QoS-Parameterwerten in einem entsprechenden Untersatz der Untersätze von QoS-Parameterwerten definiert ist, welche die durch den Benutzer gewünschte minimale Servicegröße erfüllen; und
Vergleichen jeder der Vielzahl von Größen, wobei der Schritt des Auswählens einer durch den Serviceanbieter angebotenen Servicegröße oder von keinem Service folgenden Schritt umfasst:

Auswählen von keinem Service oder einer Servicegröße auf der Basis des einen Untersatzes von QoS-Parameterwerten, welcher der kleinsten der Vielzahl von Größen zugeordnet ist.

11. Verfahren zum Abschließen einer Telekommunikationsverbindung zwischen einem Nutzer und einem Anbieter, wobei der Nutzer einen ersten Satz von Parameterwerten für wenigstens einen Parametertyp einer Vielzahl von Parametertypen spezifiziert, die Parameterwerte einen nutzerspezifischen QoS (Servicequalität)-Nutzervektor bilden, der Anbieter einen zweiten Satz verfügbar macht, der wenigstens einen Untersatz umfasst, welcher entsprechende Parameterwerte für den oder jeden im ersten Satz repräsentierten Parametertyp enthält, und wobei das Verfahren zur Anpassung der nutzerspezifischen Werte an die Fähigkeit des Anbieters zur Erfüllung der nutzerspezifischen Werte dient, umfassend folgende Schritte:

Annehmen eines Wertes oder von Werten für wenigstens einen einer Vielzahl von durch den Nutzer spezifizierten QoS-Parametertypen;
Vergleichen des oder jedes nutzerspezifischen QoS-Parameterwertes mit Werten entsprechender vom Anbieter verfügbarer Parameter zwecks Bestimmung für den oder jeden Untersatz eines Überschusswertes, der Differenzen zwischen den Werten des ersten Satzes und entsprechenden Werten des jeweiligen Untersatzes repräsentiert;
Bilden wenigstens einer Auswertegröße, wobei die oder jede Auswertegröße durch den oder die dem ersten Satz von QoS-Parameterwerten zugeordneten Überschusswerte und einen entsprechenden Untersatz des zweiten Satzes von QoS-Parametern festgelegt ist; und
Herstellen einer Verbindung zwischen dem Benutzer und dem Anbieter als Funktion der oder jeder Auswertegröße.

12. Verfahren nach Anspruch 11, bei dem eine Verbindung des Anbieters blockiert wird, wenn die nutzerspezifischen Werte für jeden der Parametertypen durch den Anbieter nicht erfüllt werden.

13. Verfahren nach Anspruch 11, bei dem die Parameterwerte wenigstens eine Bitfolge, eine Bitfehlerfolge und eine Verzögerung umfassen.

14. Verfahren nach Anspruch 11, bei dem die nutzerspezifischen Werte für die Parametertypen einen angeforderten QoS-Vektor (RSV) bilden.

**15.** Verfahren nach Anspruch 14, bei dem die entsprechenden Werte von verfügbaren Parametertypen bei einem Serviceanbieter einen angebotenen QoS-Vektor (OSV) bilden.

**16.** Verfahren nach Anspruch 15, bei dem die Werte von die hergestellte Verbindung repräsentierenden Parametertypen einen abgeschlossenen QoS-Vektor (NSV) bilden.

**17.** Verfahren nach Anspruch 15, bei dem Werte für jeden Parametertyp eines angebotenen QoS-Vektors (OSV) von Langzeitmessungen abgeleitet werden.

**18.** Verfahren nach Anspruch 15, bei dem eine Verbindung abgeschlossen wird, wenn die Bitfolge eines angebotenen QoS-Vektors (OSV) wenigstens gleich der Bitfolge eines angeforderten QoS-Vektors (RSV) ist und jede Bitfehlerfolge und Verzögerung des angebotenen QoS-Vektors (OSV) wenigstens gleich der Bitfehlerfolge und der Verzögerung des angeforderten QoS-Vektors (RSV) ist.

**19.** Verfahren nach Anspruch 15, bei dem eine Vielzahl von angebotenen QoS-Vektoren (OSV's) den angeforderten QoS-Vektor (RSV) erfüllt.

**20.** Verfahren nach Anspruch 14, bei dem der Nutzer eine Vielzahl von Werten für jeden Parametertyp einer Vielzahl von Parametertypen spezifiziert, die eine Vielzahl von angeforderten QoS-Vektoren (RSV's) bilden.

**21.** Verfahren nach Anspruch 20, bei dem die nutzerspezifizierten Werte zwei angeforderte QoS-Vektoren (RSV's) bilden.

**22.** Verfahren nach Anspruch 21, bei dem die spezifizierten Werte für die beiden angeforderten QoS-Vektoren (RSV's) gewünschte und annehmbare Werte sind.

**23.** Verfahren nach Anspruch 16, bei dem der abgeschlossene QoS-Vektor (NSV) ein Null-Vektor ist, wenn jeder der Parameter wenigstens eines angebotenen QoS-Vektors (OSV) einen entsprechenden Parameter des angeforderten QoS-Vektors (RSV) nicht erfüllt.

**24.** Verfahren nach Anspruch 13, bei dem die nutzerspezifischen Werte von Parametertypen weiterhin einen preisbezogenen Wert enthalten, der durch den Nutzer toleriert wird.

**Revendications**

**1.** Procédé de négociation d'une connexion de télécommunications, comprenant les étapes consistant à:

introduire un premier ensemble de valeurs de types de paramètres de qualité de service (QoS) représentant un niveau de service, désiré par l'utilisateur ;
introduire un second ensemble de valeurs de paramètres de qualité de service, représentant au moins un niveau offert de service provenant d'un prestataire de service et contenant, pour le ou pour chaque niveau offert de service, une valeur pour chacun des types de paramètres représentés dans le premier ensemble ;
comparer chaque valeur, associée au premier ensemble de valeurs de paramètres QoS, avec la ou avec chaque valeur correspondante associée au second ensemble de valeurs de paramètres QoS afin de déterminer, pour le ou pour chaque niveau offert de service, des valeurs d'excès, représentant des différences entre les valeurs du premier ensemble et les valeurs correspondantes du second ensemble, associées au niveau respectif de service, qui est offert ;
former une quantité d'évaluation pour le ou pour chaque niveau offert de service, sur base des valeurs d'excès, associées au niveau respectif de service, qui est offert ;
sélectionner un niveau de service, offert par le prestataire de service, qui satisfait le mieux au niveau de service désiré par l'utilisateur, ou aucun service, sur base de la ou de chaque quantité d'évaluation ; et
si un niveau de service, qui satisfait le mieux au niveau de service désiré par l'utilisateur, est sélectionné, établir la connexion de télécommunications pour l'utilisateur en fonction du niveau sélectionné de service, offert par le prestataire de service.

**2.** Procédé selon la revendication 1, dans lequel chaque valeur de paramètre QoS du premier ensemble de valeurs est associée à un type différent de paramètre QoS.

**3.** Procédé selon la revendication 2, dans lequel ledit second ensemble de valeurs de paramètres QoS comprend une pluralité de sous-ensembles de valeurs de paramètres QoS, et dans lequel chacun de la pluralité de sous-ensembles contient une valeur de paramètre QoS pour chacun des types de paramètres QoS, représentés dans le premier ensemble de valeurs de paramètres QoS.

**4.** Procédé selon la revendication 3, dans lequel ladite étape consistant à comparer chaque valeur associée au premier ensemble de valeurs de paramètres QoS avec la ou avec chaque valeur correspondante associée au second ensemble de valeurs de paramètres QoS comprend les étapes consistant à:

établir un premier espace graphique en fonction du premier ensemble de valeurs de paramètres QoS.
établir une pluralité d'espaces graphiques, dans lesquels chacun de la pluralité d'espaces graphiques est une fonction des valeurs de paramètres QoS dans un sous-ensemble correspondant de la pluralité de sous-ensembles de valeurs de QoS; et
déterminer une pluralité de zones à recouvrement, dans lesquelles chacune de la pluralité de zones à recouvrement représente un espace à recouvrement entre le premier espace graphique et un espace différent parmi la pluralité d'espaces graphiques ; et dans lequel
l'étape consistant à former une quantité d'évaluation pour le ou pour chaque niveau offert de service comprend les étapes consistant à :

évaluer la taille associée à chaque zone à recouvrement ; et
comparer les tailles évaluées.

**5.** Procédé selon la revendication 4, dans lequel ladite étape consistant à sélectionner un niveau de service, offert par le prestataire de service, qui satisfait le mieux au niveau de service désiré par l'utilisateur, ou aucun service, comprend l'étape consistant à :

sélectionner un niveau de service, offert par le prestataire de service, comme une fonction de la taille associée à chaque zone à recouvrement, ou aucun service.

**6.** Procédé selon la revendication 5, dans lequel ladite étape consistant à sélectionner un niveau de service comme une fonction de la taille associée à chaque zone à recouvrement, ou aucun service, comprend l'étape consistant à :

sélectionner un niveau de service, offert par le prestataire de service, sur base du sous-ensemble de valeurs de paramètres QoS, qui est associé à la taille la plus grande parmi la pluralité de tailles évaluées.

**7.** Procédé selon la revendication 3, dans lequel ladite étape consistant à comparer chaque valeur, associée au premier ensemble de valeurs de paramètres QoS, avec la ou avec chaque valeur correspondante associée au second ensemble de valeurs de paramètres QoS, comprend l'étape consistant à :

établir une pluralité de grandeurs, dans laquelle chacune de la pluralité de grandeurs est une fonction d'un vecteur défini par le premier ensemble de valeurs de paramètres QoS et par les valeurs de paramètres QoS dans un sous-ensemble correspondant de la pluralité de sous-ensembles de valeurs de QoS; et dans lequel l'étape consistant à former une quantité d'évaluation pour le ou pour chaque niveau offert de service comprend les étapes consistant à :

évaluer chacune de la pluralité de grandeurs ; et
comparer les grandeurs évaluées.

**8.** Procédé selon la revendication 7, dans lequel ladite étape consistant à sélectionner un niveau de service, offert par le prestataire de service, qui satisfait le mieux au niveau de service désiré par l'utilisateur, ou aucun service, comprend l'étape consistant à :

sélectionner aucun service, ou un niveau de service offert par le prestataire de service, comme une fonction des grandeurs évaluées comparées.

**9.** Procédé selon la revendication 8, dans lequel ladite étape consistant à sélectionner aucun service, ou un niveau de service comme une fonction des grandeurs évaluées comparées, comprend l'étape consistant à :

sélectionner aucun service, ou un niveau de service offert par le prestataire de service, sur base du sous-ensemble de valeurs de paramètres QoS, qui est associé à la grandeur la plus élevée de la pluralité de grandeurs évaluées comparées.

10. Procédé selon la revendication 3, comprenant en outre les étapes consistant à :

déterminer si le niveau de service, associé à chacun de la pluralité de sous-ensembles de valeurs de paramètres QoS, satisfait à un niveau minimal de service, désiré par l'utilisateur ; et
identifier uniquement ces sous-ensembles de valeurs de paramètres QoS, qui satisfont au niveau minimal de service, désiré par l'utilisateur ;
établir une pluralité de grandeurs, dans lesquelles chacune de la pluralité de grandeurs est une fonction d'un vecteur défini par le premier ensemble de valeurs de paramètres QoS et les valeurs de paramètres QoS dans un sous-ensemble correspondant des sous-ensembles de valeurs de paramètres QoS, qui satisfont au niveau minimal de service, désiré par l'utilisateur; et
comparer chacune de la pluralité de grandeurs, dans lequel ladite étape consistant à sélectionner un niveau de service offert par le prestataire de service, ou aucun service, comprend l'étape consistant à :

sélectionner aucun service, ou un niveau de service sur base du sous-ensemble de valeurs de paramètres QoS, qui est associé à la grandeur la plus petite de la pluralité de grandeurs.

11. Procédé pour la négociation d'une connexion de télécommunications entre un utilisateur et un support, dans lequel l'utilisateur spécifie un premier ensemble de valeurs de paramètres pour au moins un d'une pluralité de types de paramètres pour un type de connexion désiré, lesdites valeurs de paramètres formant un vecteur QoS (qualité de service) spécifié par l'utilisateur, et le support met à disposition un second ensemble, comprenant au moins un sous-ensemble contenant des valeurs de paramètres correspondants pour le ou pour chaque type de paramètre représenté dans le premier ensemble, le procédé étant destiné à faire concorder les valeurs spécifiées par l'utilisateur avec une capacité du support à satisfaire aux valeurs spécifiées par l'utilisateur, et comprenant les étapes consistant à :

accepter une valeur ou des valeurs pour au moins un d'une pluralité de types de paramètres QoS, spécifiés par un utilisateur ;
comparer la ou chaque valeur de paramètre QoS, spécifiée par l'utilisateur, avec des valeurs de paramètres correspondants, disponibles sur ledit support, afin de déterminer pour le ou pour chaque sous-ensemble, une valeur ou des valeurs d'excès représentant des différences entre les valeurs du premier ensemble et des valeurs correspondantes du sous-ensemble respectif ;
évaluer au moins une quantité d'évaluation, dans laquelle la ou chaque quantité d'évaluation est déterminée par la valeur ou les valeurs d'excès associées au premier ensemble de valeurs de paramètres QoS et un sous-ensemble respectif du second ensemble de valeurs de paramètres QoS ; et
établir une connexion entre l'utilisateur et le support, comme une fonction de la ou de chaque quantité d'évaluation évaluée.

12. Procédé selon la revendication 11, dans lequel une connexion vers le support est bloquée si les valeurs spécifiées par l'utilisateur pour chacun desdits types de paramètres ne sont pas satisfaites par le support.

13. Procédé selon la revendication 11, dans lequel les valeurs de paramètres comprennent au moins l'un d'un débit binaire, d'un taux d'erreurs sur les bits, et d'un temps d'attente.

14. Procédé selon la revendication 11, dans lequel les valeurs spécifiées par l'utilisateur pour lesdits types de paramètres forment un vecteur QoS demandé (RSV) .

15. Procédé selon la revendication 14, dans lequel les valeurs correspondantes de types de paramètres, disponibles sur un prestataire de service, forment un vecteur QoS offert (OSV).

16. Procédé selon la revendication 15, dans lequel les valeurs de types de paramètres représentant la connexion établie forment un vecteur QoS négocié (NSV) .

17. Procédé selon la revendication 15, dans lequel des valeurs pour chaque type de paramètre d'un OSV sont déduites de mesures sur le long terme.

**18.** Procédé selon la revendication 15, dans lequel une connexion est négociée si le débit binaire d'un OSV est au moins égal au débit binaire du RSV, et chacun du taux d'erreurs sur les bits et du temps d'attente du OSV est au plus égal au taux d'erreurs sur les bits et au temps d'attente du RSV.

**19.** Procédé selon la revendication 15, dans lequel une pluralité de vecteurs QoS offert (OSVs) satisfont au vecteur QoS demandé.

**20.** Procédé selon la revendication 14, dans lequel l'utilisateur spécifie une pluralité de valeurs pour chacun d'une pluralité de types de paramètres, qui forment une pluralité de RSVs.

**21.** Procédé selon la revendication 20, dans lequel les valeurs spécifiées par l'utilisateur forment deux RSVs.

**22.** Procédé selon la revendication 21, dans lequel les valeurs spécifiées pour les deux RSVs sont des valeurs désirées et des valeurs acceptables.

**23.** Procédé selon la revendication 16, dans lequel un NSV est un vecteur zéro si chacun des paramètres d'au moins un OSV ne satisfait pas à un paramètre correspondant d'un RSV.

**24.** Procédé selon la revendication 13, dans lequel les valeurs, spécifiées par l'utilisateur, de types de paramètres incluent en outre un niveau de sensibilité au prix, qui est toléré par l'utilisateur.

FIG. 1

BIT RATE

OSV$_1$

A$_{RO_1}$

OSV$_2$

RSV  A$_{RO_2}$

SIGNAL
QUALITY   [C/I or SNR]
(BER)

# FIG. 2

BIT RATE

OSV$_1$

L$_{RO_1}$

L$_{RO_2}$  OSV$_2$

RSV

QUALITY

# FIG. 3

FIG. 5

FIG. 4